# EUROPÄISCHE PATENTSCHRIFT

(11) **EP 0 465 944 B1**
(45) Veröffentlichungstag und Bekanntmachung des Hinweises auf die Patenterteilung: **15.03.1995**
(21) Anmeldenummer: 91110678.9
(22) Anmeldetag: 27.06.1991
(51) Int. Cl.: F02D 19/02, F02D 35/02

(54) **Gasmotor**
Gas engine
Moteur à gaz

(43) Veröffentlichungstag der Anmeldung: 15.01.1992
(73) Patentinhaber: Motoren-Werke Mannheim Aktiengesellschaft, D-68140 Mannheim (DE)
(72) Erfinder: Stellwagen, Karl, W-6800 Mannheim 31 (DE)
(74) Vertreter: Nau, Walter, Dipl.-Ing.

(56) Entgegenhaltungen:
- EP-A- 0 084 219
- EP-A- 0 327 900
- DE-A- 2 919 273
- US-A- 4 430 978
- US-A- 4 518 268
- US-A- 4 706 628

## Beschreibung

Die Erfindung betrifft einen Gasmotor nach dem Oberbegriff des Anspruchs 1 (US-A-4430978).

Gasmotoren bestehen u.a. aus einer Gemischleitung zu den Verbrennungsräumen in den Zylindern, wobei in der Gemischleitung ein Mischer angeordnet ist, der dem Gas Luft zumischt. Zur Dosierung der Gaszufuhr ist ein Dosierventil vorgesehen.

Um die vom Gesetzgeber geforderten Emissionsgrenzwerte einhalten zu können, ist es Stand der Technik, das Dosierventil über ein Regelgerät in Abhängigkeit von der Schadstoffemission des Motors zu steuern. Hierzu wird dem Regelgerät als Regelgröße ein für die Schadstoffemission maßgebender Motorkennwert, nämlich der Sauerstoffgehalt im Abgas, und ein Leistungssignal des Motors zugeführt. Im Regelgerät werden diese Werte mit einem Sollwert verglichen und danach wird das Dosierventil so gesteuert, daß der vorgegebene Sollwert erreicht wird.

Nachteilig hieran ist, daß bei einer Schwankung der Gasqualität, z.B. durch Beimischung von Propangas zum Erdgas, die Schadstoffemission bei gleichbleibendem Luftverhältnis im Abgas steigt.

Der Erfindung liegt daher die Aufgabe zugrunde, einen Gasmotor gemäß dem Oberbegriff des Anspruchs 1 derart weiterzubilden, daß die Schadstoffemission auch bei schwankender Gasqualität und schwankender Ansaugtemperatur der Luft gering ist.

Erfindungsgemäß wird diese Aufgabe durch die Merkmale des kennzeichnenden Teils vom Anspruch 1 gelöst. Der Motorkennwert ist die mittlere Temperatur im Verbrennungsraum. Da diese Temperatur von der Gasqualität und der Ansaugtemperatur der Luft abhängt, ist diese Meßgröße optimal zur Regelung des Luftverhältnisses und damit zur Schadstoffbegrenzung geeignet. Dem Regelgerät werden diese mittlere Temperatur und die zugehörige Leistung des Motors zugeführt. Diese beiden Größen werden dann im Regelgerät mit einem Sollwert verglichen. Anschließend wird das Dosierventil so verstellt, daß das Gas-Luftverhältnis einen optimalen Wert für die Schadstoffemissionen annimmt.

Die mittlere Temperatur wird vorteilhafterweise über Sensoren, z.B. Thermoelemente abgegriffen.

Es genügt schon die Messung der mittleren Temperatur eines Verbrennungsraumes. Vorteilhaft ist es jedoch, die mittleren Temperaturen aller Zylinder zu erfassen und aus diesen einen Mittelwert zu bilden.

Die Leistung des Gasmotors wird über die Drosselklappe in der Gemischleitung erfaßt und dem Regelgerät zugeführt. Die Leistung kann auch elektrisch abgegriffen werden.

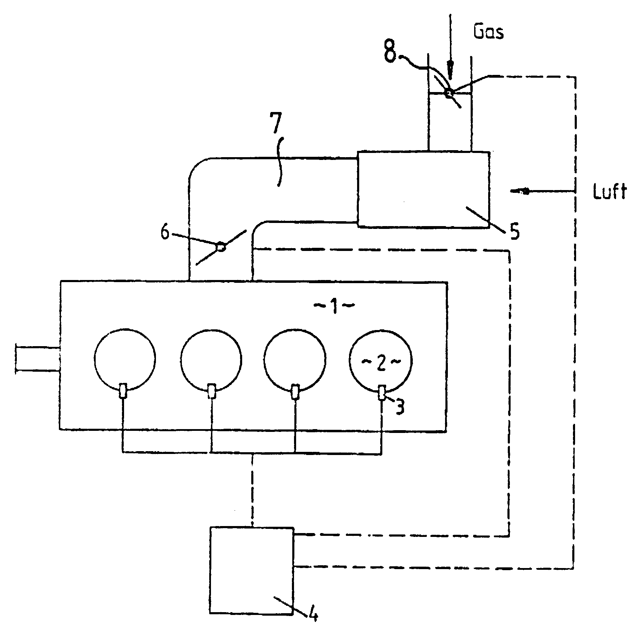

Die Figur zeigt einen erfindungsgemäßen Gasmotor 1. Über eine Gemischleitung 7 wird dem Gasmotor 1 Gas zugeführt. In dieser Gemischleitung 7 ist ein Mischer 5 angeordnet, der dem Gas Luft zumischt. Vor dem Mischer 5 ist ein Dosierventil 8 zur Dosierung der Gaszufuhr angeordnet. Ein Regelgerät 4 ist zur Regelung des Gas-Luftverhältnisses vorgesehen, welches das Dosierventil 8 derart steuert, daß das Gas-Luftverhältnis die Anforderungen an niedrige Schadstoffemissionen erfüllt.

Als Regelgröße werden dem Regelgerät 4 die mittlere Temperatur der Verbrennungsräume bzw. der Zylinder zugeführt. Diese Temperaturwerte werden über Sensoren 3 abgegriffen. Die Leistung des Motors wird über die Drosselklappe 6 in der Gemischleitung 7 abgegriffen, wobei z.B. die Stellung dieser Drosselklappe 6 dem Regelgerät 4 übermittelt wird. Das Regelgerät vergleicht diese beiden Werte, die mittlere Temperatur und die zugehörende Leistung, mit einem gespeicherten Sollwert und regelt danach das Dosierventil 8 solange, bis die gemessenen Ist-Werte dem Sollwert entsprechen. Die Schadstoffemissionen sind dadurch minimal. Da als Regelgröße die mittlere Temperatur der Verbrennungsräume eingeht, werden niedrige Schadstoffemissionen auch bei schwankender Gasqualität und schwankender Ansaugtemperatur der Luft erreicht.

## Patentansprüche

1. Gasmotor, insbesondere Ottogasmotor, mit einer Gemischleitung (7) zu den Verbrennungsräumen in den Zylindern (2) und mit einem Mischer (5) in der Gemischleitung (7), in dem dem Verbrennungsgas Luft zugemischt wird und einem Dosierventil (8) zur Dosierung der Gaszufuhr, wobei das Dosierventil (8) von einem Reglergerät (4) zur Steuerung der Schadstoffemission betätigt wird und das Reglergerät (4) in Abhängigkeit der Leistung des Gasmotors (1) und einer Temperatur im Verbrennungsraum das Dosierventil (8) verstellt, *dadurch gekennzeichnet,* daß die Leistung des Gasmotors (1) über eine Drosselklappe (6) in der Gemischleitung (7) abgegriffen wird, und daß die Temperatur im Verbrennungsraum als Mittelwert der in allen Verbrennungsräumen erfaßten mittleren Temperaturen gebildet wird.

2. Gasmotor nach Anspruch 1,
*dadurch gekennzeichnet,* daß die mittlere Temperatur über Sensoren (3), z. B. Thermoelemente abgegriffen wird.

3. Gasmotor nach einem der Ansprüche 1, 2
*dadurch gekennzeichnet,* daß die Leistung elektrisch abgegriffen wird.

## Claims

1. A gas engine, more especially an Otto cycle (spark-ignition) gas engine, comprising a duct or conduit (7) for conveying mixture to the combustion chambers in the cylinders (2) and also comprising a mixer (5) in the mixture duct or conduit (7), in which the combustion gas is mixed with air, and a metering valve (8) for metering the supply of gas, the metering valve (8) being actuated by a control device (4) for controlling the emission of pollutants and the control device (4) adjusting the metering valve (8) in dependence on the power output by the gas engine (1) and a temperature in the combustion chambers, characterised in that the power output of the gas engine (1) is measured via a throttle flap or valve (6) in the mixture duct or conduit (7), and the temperature in the combustion chamber is obtained in the form of an average value of the average temperatures detected in all the combustion chambers.

2. A gas engine according to claim 1, characterised in that the average temperature is measured via sensors (3), e.g. thermocouple elements.

3. A gas engine according to claim 1 or 2, characterised in that the power output is measured by electrical means.

## Revendications

1. Moteur à gaz, en particulier moteur à gaz à allumage commandé, avec une canalisation de mélange (7) en direction des chambres de combustion dans les cylindres (2) et avec un mélangeur (5) dans la canalisation de mélange (7), dans lequel on ajoute et mélange de l'air avec le gaz de combustion, et avec une vanne de réglage (8) pour doser l'amenée du gaz, la vanne de réglage (8) étant actionnée par un appareil régulateur (4) pour réguler l'émission de substances nocives et l'appareil régulateur (4) ajustant la vanne de réglage (8) en fonction de la puissance du moteur à gaz (1) et d'une température dans la chambre de combustion, caractérisé en ce que la puissance du moteur à gaz (1) est prélevée au papillon de commande (6) dans la conduite de mélange (7), et en ce que la température dans la chambre de combustion est formée comme valeur moyenne des températures moyennes détectées dans toutes les chambres de combustions.

2. Moteur à gaz selon la revendication 1, caractérisé en ce que la température moyenne est prélevée par des capteurs (3), par exemple des thermocouples.

3. Moteur à gaz selon une des revendications 1, 2, caractérisé en ce que la puissance est prélevée de manière électrique.
